# EUROPÄISCHE PATENTSCHRIFT

(11) **EP 3 208 646 B1**
(45) Veröffentlichungstag und Bekanntmachung des Hinweises auf die Patenterteilung: **10.07.2019**
(21) Anmeldenummer: 17155871.1
(22) Anmeldetag: 13.02.2017
(51) Int. Cl.: G02B 21/26, G12B 5/00, G02B 7/00

(54) **VERSTELLEINRICHTUNG EINER PROBENHALTERUNG UND MIKROSKOP MIT VERSTELLEINRICHTUNG**
ADJUSTING DEVICE OF A SAMPLE HOLDER AND MICROSCOPE WITH ADJUSTING DEVICE
DISPOSITIF DE RÉGLAGE D'UN PORTE-ÉCHANTILLON ET MICROSCOPE COMPRENANT UN DISPOSITIF DE RÉGLAGE

(30) Priorität: 19.02.2016 DE 102016202582
(43) Veröffentlichungstag der Anmeldung: 23.08.2017
(73) Patentinhaber: Carl Zeiss Microscopy GmbH, 07745 Jena (DE)
(72) Erfinder: KALKBRENNER, Thomas, 07745 Jena (DE); PERGANDE, Saskia, 07749 Jena (DE); KAUFHOLD, Tobias, 07749 Jena (DE)
(74) Vertreter: Meyer, Jork

(56) Entgegenhaltungen:
- DE-U1- 29 618 149
- US-A- 3 424 413
- US-A1- 2002 131 167
- US-B1- 6 677 565

## Beschreibung

Die Erfindung betrifft eine Verstelleinrichtung gemäß dem Oberbegriff des Anspruchs 1. Weiterhin betrifft die Erfindung ein Mikroskop umfassend die Verstelleinrichtung.

Bei High-End Mikroskopsystemen, deren Objektive hohe Numerische Aperturen (fortan auch als NA bezeichnet) aufweisen (z. B. Laserscanningmikroskope, hochauflösende Systeme, Superresolution-Systeme, Geräte zur Ausführung der internen Totalreflektionsfluoreszenzmikroskopie [TIRF]) spielt die Ausrichtung von in dem Strahlengang vorhandenen transparenten Objekten, insbesondere aber eines Deckglases, mit dem eine zu beobachtende Probe abgedeckt ist, eine wichtige Rolle für die erreichte Auflösung.

So führt ein gegenüber der optischen Achse des Mikroskops geneigtes Deckglas vor allem bei Wasserimmersionsobjektiven zu unerwünschten Aberrationen wie Astigmatismus und Koma.

Solche Aberrationen treten insbesondere bei Systemen auf, deren Design bereits eine Neigung der optischen Achse gegenüber beispielsweise dem Deckglas vorsieht. Solche geneigten Durchgänge des Strahlengangs durch ein optisch wirksames Element wie das Deckglas sind beispielsweise bei Varianten der Lichtblattmikroskopie (SPIM) vorgesehen. In diesen Varianten werden auftretende Aberrationen mit speziellen Korrekturelementen auskorrigiert, wie diese beispielsweise in der DE 10 2013 112 600 A1 und der DE 10 2013 105 586 A1 beschrieben sind.

Dabei hängt die Funktion der Korrektur stark von der Form und der Lage des Deckglases ab. Insbesondere die Lage des Deckglases relativ zur optischen Achse des abbildenden Systems kann in der Praxis stark variieren. Zwar kann konstruktiv ein Probenhalter vorgesehen sein, dessen Ausrichtung aufgrund seiner Abmessungen sichergestellt ist, jedoch ist das Deckglas nur ein Bestandteil der in der Mikroskopie eingesetzten Probenhalterungen (z. B. Petrischalen, Mikrotiterplatten, Objektträger) und kann unabhängig von der Ausrichtung der Probenhalterung orientiert sein. Während die in der Probenhalterung aufgenommene Probe über dem jeweiligen Grundkörper der Probenhalterung mehr oder weniger definiert gehalten wird, ist die Ausrichtung des eigentlichen Deckglases relativ zu diesem Grundkörper, und damit auch relativ zu der optischen Achse des Mikroskops, Undefiniert und kann auch bei denselben Probenhalterungen von Probe zu Probe variieren.

Aus der DE 296 18 149 U1 ist eine Verstelleinrichtung bekannt, bei der ein Trägerelement über sechs Koppelelemente, die jeweils zwei lineare und drei rotatorische Freiheitsgrade besitzen und mit einem linearen Antrieb verbunden sind, an eine Basis gekoppelt ist. Die Antriebe der Verstelleinrichtung sind an der Basis angeordnet. Über die Antriebe sind die basisseitigen Anlenkpunkte der Koppelelemente in ihrer Position veränderbar.

Das in der DE 296 18 149 U1 beschriebene Hexapod ist aufgrund des erforderlichen großen Bauraums für den Einsatz in der Lichtmikroskopie mit Optiken hoher Numerischer Apertur ungeeignet und dafür konzipiert, Vorrichtung mit einem erheblichen Gewicht und Dimension wie Flug- und Fahrsimulatoren, Arbeitsköpfe von Werkzeugmaschinen sowie Montage- oder Bearbeitungsvorrichtungen zu tragen und auszurichten. Ein solches Hexapod ist sehr teuer in der Herstellung und hinsichtlich seiner Steuerung aufwändig.

Aus der US 2002/131167 A1 ist ein Tisch bekannt, auf dem ein justierbarer Probenhalter angeordnet ist. Mittels mehrerer Justierelemente ist der Probenhalter relativ zu dem Tisch einstellbar.

Ein vergleichbares System ist aus der US 3,424,413 A bekannt. Eine Plattform ist mittels dreier verstellbarer Justierelemente relativ zu eine Basis verstellbar. Die Justierelemente sind in einem rechtwinkligen Dreieck zueinander angeordnet, wobei zwei der Justierelemente eine laterale Verstellung ermöglichen.

In der US 6,677,565 B1 sind ein Autofokusverfahren und eine dafür geeignete Vorrichtung offenbart. Dabei ist eine zu beobachtende Fläche, beispielsweise ein Probenhalter oder Probentisch eines Mikroskopsystems, kippbar gestaltet. Zur Justage der Fläche werden Lichtmuster auf die Fläche projiziert und mit einer Kamera erfasst. Anhand der erfassten Bilder kann die Entfernung und Lage der Fläche ermittelt und diese einer gewünschten Fokuslage zugestellt werden.

Der Erfindung liegt die Aufgabe zugrunde eine Vorrichtung zur Ausrichtung einer Probenhalterung vorzuschlagen, mittels derer die aus dem Stand der Technik bekannten Nachteile verringert oder gar vermieden werden.

Die Aufgabe wird hinsichtlich der Vorrichtung durch die Merkmale des Anspruchs gelöst.

Vorteilhafte Weiterbildungen sind Gegenstand der abhängigen Ansprüche.

Die Verstelleinrichtung einer Probenhalterung umfasst eine Basis mit darauf angeordneten Antrieben sowie einen Träger, wobei der Träger mittels der Antriebe verstellbar ist und der Träger zur Aufnahme der Probenhalterung ausgebildet ist. Je Antrieb ist ein Koppelelement vorhanden, das zur Verbindung von Basis und Träger ausgebildet ist, wobei jedes Koppelelement sowohl mindestens einen linearen Freiheitsgrad als auch drei rotatorische Freiheitsgrade zulässt. Ferner ist der Träger mittels der Koppelelemente entlang jeweils einer von dem Koppelelement auf den Träger gerichteten Bewegungsachse linear bewegbar.

Gekennzeichnet ist eine erfindungsgemäße Verstelleinrichtung dadurch, dass der Träger mittels der angetriebenen Koppelelemente in Richtung jeder der Achsen eines kartesischen Koordinatensystems verstellbar ist, sich die Bewegungsachsen virtuell in einem Pivotpunkt des Trägers schneiden und die Verbindung des Koppelelements mit dem Träger mittels eines entlang der Bewegungsachse beweglichen Bolzens gebildet ist, wobei der Bolzen in einem am trägerseitigen Ende der Antriebsspindel vorhandenen Kugelgelenk und dort in einer das Kugelgelenk durchziehenden Bohrung gelagert ist und der Bolzen mit einem seiner Enden in einer Bohrung in einer Stirnseite des Trägers eingreift und der Bolzen in der Bohrung des Kugelgelenks und/oder in der Bohrung des Trägers beweglich gelagert ist.

Der Schnittpunkt der Bewegungsachsen und/oder der Pivotpunkt liegt beziehungsweise liegen dabei vorteilhaft innerhalb des Bildfelds eines Mikroskops, welches mit der Verstelleinrichtung ausgestattet ist. Die Positionierung des Schnittpunkts und/oder des Pivotpunkts im Bildfeld unterstützt eine präzise Ausrichtung der Probenhalterung.

Eine Probenhalterung ist beispielsweise ein Objektträger, eine Petrischale, eine Multiwellplatte oder eine Mikrotiterplatte beziehungsweise Ausschnitte davon, Streifen von mehreren Probenbehältern, Küvetten, sogenannte PCR-Tubes und dergleichen.

Die Probenhalterung kann ein optisch wirksames Element umfassen. Beispielsweise ist eine in der Probenhalterung platzierte Probe mit einem Deckglas abgedeckt oder abdeckbar. Das Deckglas stellt in diesem Fall das optisch wirksame Element dar. Weitere optisch wirksame Elemente können beispielsweise für eine Beobachtungsstrahlung transparente Deckel, Folien oder Hauben sein.

Eine Basis ist beispielsweise eine Grundplatte, ein ein-oder mehrteiliges Profilelement oder zueinander in einer definierten räumlichen Beziehung angeordnete Bauteile, die zur Aufnahme der Antriebe ausgebildet sind. Die Basis kann beispielsweise in Form eines Rahmens ausgebildet sein, so dass die Probenhalterung beziehungsweise die zu untersuchende Probe in der Probenhalterung nicht durch die Basis überdeckt ist und eine Betrachtung der Probe auch aus der Richtung der Basis möglich ist.

Die Antriebe sind mit der Basis ortsunveränderlich, also fest oder starr, verbunden. Sie können mit der Basis beispielsweise verschraubt, verbolzt, auf-oder eingesteckt, geklemmt, verklebt, verlötet, verschweißt und/oder vernietet sein.

Es ist von Vorteil, wenn drei Antriebe vorhanden sind. Eine solche Ausführung der Verstelleinrichtung ermöglicht eine präzise Ausrichtung der Probenhalterung mit wenigen Antrieben. Zudem ist der erforderliche Bauraum gering und die Verstelleinrichtung ist beispielsweise sowohl in einem Mikroskop in aufrechter als auch in inverser Bauart verwendbar.

Die Antriebe weisen jeweils eine Antriebsachse auf, entlang der eine auf das Koppelelement übertragene oder übertragbare Zustellbewegung des Antriebs bewirkt beziehungsweise bewirkbar ist. Die Antriebsachsen sind dabei im Wesentlichen zueinander parallel und senkrecht zur Basis gerichtet. Antriebsachsen mit Abweichungen von bis zu 5° hinsichtlich ihrer Parallelität beziehungsweise ihrer Orthogonalität zur Basis gelten als parallel beziehungsweise als orthogonal.

Die Verstelleinrichtung ist vorteilhaft dazu ausgebildet, Verstellwege mit einer hohen Präzision zu realisieren. Die im Wesentlichen senkrechte Stellung der Antriebsachsen unterstützt eine präzise Verstellung unter Vermeidung lateraler Bewegungsanteile.

Dazu kann mindestens einer der Antriebe, vorteilhaft alle Antriebe, mit einer Antriebsspindel versehen sein, deren Längsachse mit der Antriebsachse des Antriebs zusammenfällt. Die Antriebsspindel kann mit einem geeigneten Gewinde, beispielsweise mit einem Feingewinde, versehen sein.

Als Antriebe sind jegliche Linearantriebe sowie rotatorische Antriebe mit Mitteln zur Überführung einer Rotationsbewegung in eine lineare Bewegung geeignet. Mögliche Antriebe sind Schrittmotoren mit Spindeltrieb (Spindel innenliegend oder außen); piezobasierte Antriebe; Piezostapel (nur für Tilt-Korrektur); Piezo-Linearmotoren; z. B. Schreitantriebe, Stick-Slip-Antriebe, Ultraschallantriebe; lineare Servoantriebe; lineare Synchronantriebe; lineare Schrittmotoren oder VoiceCoil-Antriebe.

Die Antriebsspindeln können durch Federn, beispielsweise durch Zug- oder Druckfedern, belastet sein, um nachteiligen Wirkungen der Schwerkraft entgegen zu wirken oder eventuell vorhandenes Lagerspiel zu kompensieren. Durch eine solche Ausführung ist beispielsweise eine Entlastung der Antriebsspindel und/oder einer Motorachse des Antriebs erreicht.

Die Antriebsspindeln dienen in einfachen Ausführungen selbst als Führung oder Führungselement des Koppelelements.

In weiteren Ausführungen können die Antriebsspindeln mit einer in Richtung der Z-Achse wirkenden Führung kombiniert sein.

Ferner können die Antriebe mehrteilig aufgebaut sein (gestapelte Aktoren). Beispielsweise ist ein Abschnitt eines Spindeltriebs und/oder einer Antriebsspindel für eine Grobeinstellung in Richtung der Z-Achse und zur groben Ausrichtung der Neigung ausgebildet. Daran anschließend ist ein Abschnitt ausgebildet, der beispielsweise in Form eines Piezoaktors vorhanden ist und einer schnellen und feinen Ausrichtung der Neigung dient.

Die Antriebsspindeln weisen an ihrem trägerseitigen Ende ein Kugelgelenk.

In einem Beispiel, welches nicht Gegenstand der Erfindung ist, können die Antriebsspindeln eine gerundete und vorzugsweise gehärtete oder beschichtete Endfläche aufweisen. Die Endfläche (Kugelkuppe) drückt gegen eine Lagerfläche des Trägers. Als Zugfedern ausgebildete Federelemente, mit denen entsprechend große Zugkräfte bewirkbar sind, dienen der Erzeugung und Aufrechterhaltung eines permanenten Gegendrucks des Trägers auf die Endfläche jeder der Antriebsspindeln.

Mittels solcher Federelemente kann ein vorhandenes Spiel in Lagern und/oder den Gewinde/Mutter-Paarungen der Antriebe kompensiert werden.

Alle Antriebe können mit Mitteln zur Positionserfassung versehen sein oder mit solchen Mitteln in Verbindung stehen.

Die Antriebe sind beispielsweise derart angeordnet, dass durch die Antriebe, insbesondere durch deren jeweilige Antriebsachsen, Eck- oder Endpunkte einer Trägerfläche des Trägers gegeben sind. Der Pivotpunkt liegt auf der Trägerfläche.

Der Träger und die Trägerfläche können jede beliebige Form aufweisen und beispielsweise rechteckig, rund, oval, dreieckig, vieleckig sowie unregelmäßig geformt sein. Vorteilhaft ist es, wenn drei Antriebe unter Winkeln von 120° zueinander in einer Ebene angeordnet sind und so ein gleichseitiges Dreieck aufspannen. Eine solche Anordnung der Antriebe erlaubt eine vorteilhafte, da weitgehend symmetrische, Verteilung und Kompensation auftretender Biegekräfte/Biegemomente des Trägers (Kippkräfte).

In weiteren möglichen Ausführungen spannen die Antriebe ein rechtwinkliges oder ein gleichschenkliges Dreieck als Trägerfläche auf. Sind die Antriebe derart angeordnet, dass die Trägerfläche dreieckig ist, ist eine platzsparende Anordnung der Antriebe möglich.

In einer möglichen Ausführung der Verstelleinrichtung ist der Pivotpunkt zugleich der Flächenschwerpunkt der Trägerfläche. Dadurch wird der laterale Versatz des Pivotpunktes bei einer mittels der Antriebe erzeugten Zustellbewegung minimiert. Ist beispielsweise die optische Achse eines Mikroskops in den Pivotpunkt gerichtet, verbleibt dieser trotz Zustellbewegung ganz oder weitestgehend auf der optischen Achse.

Weitere Ausführungen der Verstelleinrichtung können einen Pivotpunkt aufweisen, der durch die Festlegung des Schnittpunkts der Bewegungsachsen außerhalb des Flächenschwerpunkts liegt. Die Verstelleinrichtung ist daher durch die Wahl der Lage der Bewegungsachsen für unterschiedliche Anwendungen konfigurierbar. Durch bestimmte Zustellbewegungen der einzelnen Antriebe kann der Pivotpunkt beliebig platziert und trotz Nivellierung gehalten werden.

Der Träger kann ein Probentisch sein, der zur Aufnahme kommerziell verfügbarer Multiwell-Platten, Objektträger und/oder Petrischalen ausgebildet ist.

Der Träger kann zusätzlich mit einem Piezotisch kombiniert oder kombinierbar sein.

Eine lineare und einem Ausgleich dienende Bewegung des Trägers in Richtung der Bewegungsachsen, bedingt durch mögliche unterschiedliche Vertikalpositionen der einzelnen Koppelelemente, ist beispielsweise durch eine Gleitlagerung von Teilen des Koppelgelenks oder durch eine Kombination von Lagern mit unterschiedlichen Freiheitsgraden erreichbar. So können beispielsweise in einer Ausführung der Verstelleinrichtung ein Pendelkugellager für eine Schwenkbewegung und ein Gleit- oder Linearkugellager für Linearbewegungen kombiniert sein.

Es sind in weiteren Ausführungen auch Kombinationen von Festkörpergelenken und/oder deren Kombination mit Gleit- und/oder Kugellagern möglich.

Erfindungsgemäß_ist das Koppelelement in Form eines entlang der Bewegungsachse beweglichen Bolzens ausgebildet, der beweglich in einer Bohrung und/oder einer Führung in dem Träger und/oder in einer Bohrung in einem Kugelgelenk, beispielsweise in einer

Kugel des Kugelgelenks, gleitend ausgeführt. Bolzen und Kugelgelenk bilden zusammen das Koppelelement.

Jeder der Bolzen weist eine Bolzenlängsachse auf, die mit der jeweiligen Bewegungsachse zusammenfällt, wodurch eine lineare Bewegung der Basis und des Trägers relativ zueinander entlang der Bewegungsachse ermöglicht ist.

In einer weiterführenden Ausführung der Verstelleinrichtung ist der Bolzen zusätzlich verkippbar gelagert. Beispielsweise kann eine Kombination eines Gleitlagers und einer weiteren Kugel oder eines weiteren Kugelgelenks oder eines Kugellagers eine zusätzliche Rotation und/oder Kippbewegung von Basis und/oder Träger ermöglichen.

Darüber hinaus ist es in einer weiteren Ausführung möglich, dass die Basis und/ oder der Träger drehbar gelagert ist beziehungsweise sind, so dass Basis und/oder Träger beziehungsweise die Verstelleinrichtung zusätzlich drehbar und/oder kippbar ist beziehungsweise sind.

Die Verstelleinrichtung in einer ihrer Ausführungen kann in einem Mikroskop verwendet sein.

In einer vorteilhaften Ausführung des Mikroskops liegt der Pivotpunkt auf der optischen Achse des Mikroskops, sodass dieser trotz einer Kippbewegung der Probenhalterung in der Fokuslage verbleibt.

Unter Verwendung einer erfindungsgemäßen Verstelleinrichtung kann beispielhaft ein nicht zur Erfindung gehörendes Verfahren ausgeführt werden, das zur Einstellung der Ausrichtung einer Probenhalterung relativ zu einer Bezugsachse oder einer Bezugsebene dient.

Die Bezugsachse ist beispielsweise die optische Achse eines optischen Geräts, insbesondere eines Mikroskops. Die Bezugsebene ist beispielsweise eine Ebene, in der sich die Basis oder der Träger erstrecken. Die Bezugsachse und/oder die Bezugsebene sind frei wählbar.

Das beispielhafte Verfahren wird ausgeführt, indem in einem Mikroskop, das eine Verstelleinrichtung in einer der möglichen Ausführungsformen umfasst, eine aktuelle Ausrichtung der Probenhalterung erfasst wird, wobei eine optische Achse des Mikroskops durch die Probenhalterung gerichtet ist. Es wird eine aktuelle Ausrichtung eines optisch wirksamen Elements der Probenhalterung erfasst, durch das die optische Achse gerichtet ist. Die erfasste aktuelle Ausrichtung des optisch wirksamen Elements wird mit einer Ausrichtung und/oder Position der Bezugsachse oder der Bezugsebene verglichen und im Falle einer Abweichung der aktuellen Ausrichtung des optisch wirksamen Elements von der Bezugsachse oder der Bezugsebene, die größer als eine vorbestimmte zulässige Abweichungstoleranz ist, wird die Ausrichtung der Probenhalterung derart verändert, dass die Abweichung der aktuellen Ausrichtung des optisch wirksamen Elements von der Bezugsachse oder der Bezugsebene kleiner als die Abweichungstoleranz ist.

Die erfindungsgemäße Verstelleinrichtung und das Mikroskop mit einer solchen Verstelleinrichtung ermöglichen vorteilhaft eine präzise und schnelle Einstellung der Ausrichtung, beispielsweise der Neigung der Probenhalterung sowie des optisch wirksamen Elements. Die Erfindung ist insbesondere für den Einsatz mit Objektiven hoher Numerischer Aperturen geeignet, die einen geringen Arbeitsabstand aufweisen. Die Verstelleinrichtung ist für aufrechte, inverse sowie für seitliche Konfigurationen optischer Geräte, insbesondere des Mikroskops, verwendbar.

Die Verstelleinrichtung ist mit allen Positioniermöglichkeiten des Mikroskops, beispielsweise dem Fokussieren, einer lateralen Verschiebung der Probenhalterung sowie mit Zusatzmodulen wie Piezo-Tischen und/oder Inkubatoren kombinierbar. Die Ausrichtung der Probenhalterung ist vorteilhaft automatisierbar.

Aufgrund des geringen Raumbedarfs bietet die erfindungsgemäße Verstelleinrichtung Raum für die Inkubatoren und/oder andere Vorrichtung zur Probenmanipulation.

Durch die realisierte motorische 3-Punkt-Auflage wird mit wenigen Antrieben eine präzise Ausrichtung der Probenhalterung sowie eine Zustellbarkeit des Trägers in Richtung der Z-Achse erreicht. Hohe Kippmomente, wie diese bei Mikroskopen gemäß dem Stand der Technik auftreten, werden an dieser Stelle vorteilhaft vermieden.

Weitere Vorteile der Verstelleinrichtung liegen in der Möglichkeit einer präzisen Verstellung in Richtung der Z-Achse und einer Neigungsjustage.

Die Verwendbarkeit gleichartiger Antriebe erlaubt eine kostengünstige Fertigung und Wartung der Verstelleinrichtung. Die Ausrichtung sowohl der Neigung in Richtung der X-und Y-Achsen als auch eine Verstellbarkeit in Richtung der Z-Achse können vorteilhaft so kombiniert werden, dass die Neigung der Verstelleinrichtung, der Probenhalterung beziehungsweise des optisch wirksamen Elements ohne eine Verstellung in Richtung der Z-Achse sowie eine Verstellung in Richtung der Z-Achse mit konstanter Neigung ermöglicht ist. Durch eine geeignete Ansteuerung und Anordnung der Antriebe lassen sich Kippungen um jeden beliebigen Punkt des Trägers realisieren.

Es können mindestens zwei der Antriebe synchron angesteuert werden, wodurch beispielsweise eine schnelle Neigungsjustage und/oder Zustellung in Richtung der Z-Achse ermöglicht ist.

Sind die Antriebe symmetrisch angeordnet, werden durch diese gleiche Bewegungsverhältnisse bewirkt, so dass eine differenzielle Ansteuerung vereinfacht programmierbar und ausführbar ist.

Insbesondere bei einer Ausrichtung in Richtung der X-und Y-Achsen (Neigung) sind lediglich sehr geringe systematische Ausrichtungsfehler auszugleichen.

Die Verstelleinrichtung bietet viel Platz für Kombinationen mit Trägeraufsätzen wie Piezoscannern, Inkubatoren etc. Das Probenhandling ist räumlich nicht oder nur sehr geringfügig eingeschränkt.

Die Verstelleinrichtung kann beispielsweise derart ausgebildet sein, dass die Antriebe im Wesentlichen für eine Ausrichtung der Neigung verwendet werden. In einer solchen Ausführung sind vorteilhaft geringe zu realisierende Bewegungsbereiche der Antriebe und/oder der Koppelelemente erforderlich, wodurch weniger Platz benötigt und der Fertigungsaufwand reduziert wird.

Es ist ferner möglich, Winkelschnitte oder Winkelscans durchzuführen. Dabei werden deutliche Verkippungen des Trägers relativ zur Bezugsachse beziehungsweise zur Bezugsebene bewirkt. Diese Winkelschnitte oder Winkelscans erlauben eine Beobachtung der Probe aus unterschiedlichen Richtungen.

Die Erfindung wird nachfolgend anhand von Ausführungsbeispielen und Abbildungen näher erläutert. Es zeigen:
- Fig. 1: eine schematische Darstellung eines ersten Ausführungsbeispiels einer Verstelleinrichtung und eines Mikroskops mit der Verstelleinrichtung;
- Fig. 2: eine schematische Teildarstellung eines zweiten Ausführungsbeispiels der Verstelleinrichtung in einer seitlichen Schnittdarstellung;
- Fig. 3: eine schematische Darstellung eines dritten Ausführungsbeispiels der Verstelleinrichtung in der Draufsicht;
- Fig. 4: eine schematische Darstellung eines vierten Ausführungsbeispiels der Verstelleinrichtung;
- Fig. 5: eine schematische Darstellung eines fünften Ausführungsbeispiels der Verstelleinrichtung;
- Fig. 6a: eine schematische Darstellung eines sechsten Ausführungsbeispiels der Verstelleinrichtung;
- Fig. 6b: eine schematische Darstellung eines siebten Ausführungsbeispiels der Verstelleinrichtung;
- Fig. 6c: eine schematische Darstellung eines achten Ausführungsbeispiels der Verstelleinrichtung und
- Fig. 6d: eine schematische Darstellung eines neunten Ausführungsbeispiels der Verstelleinrichtung.

Die in den nachfolgend beschriebenen Abbildungen verwendeten Bezugszeichen kennzeichnen jeweils gleiche Elemente. Richtungen werden mittels der Achsen eines kartesischen Koordinatensystems angegeben, dessen X-Achse X und Y-Achse Y eine Ebene X-Y aufspannen, zu der eine Basis 2 parallel angeordnet ist.

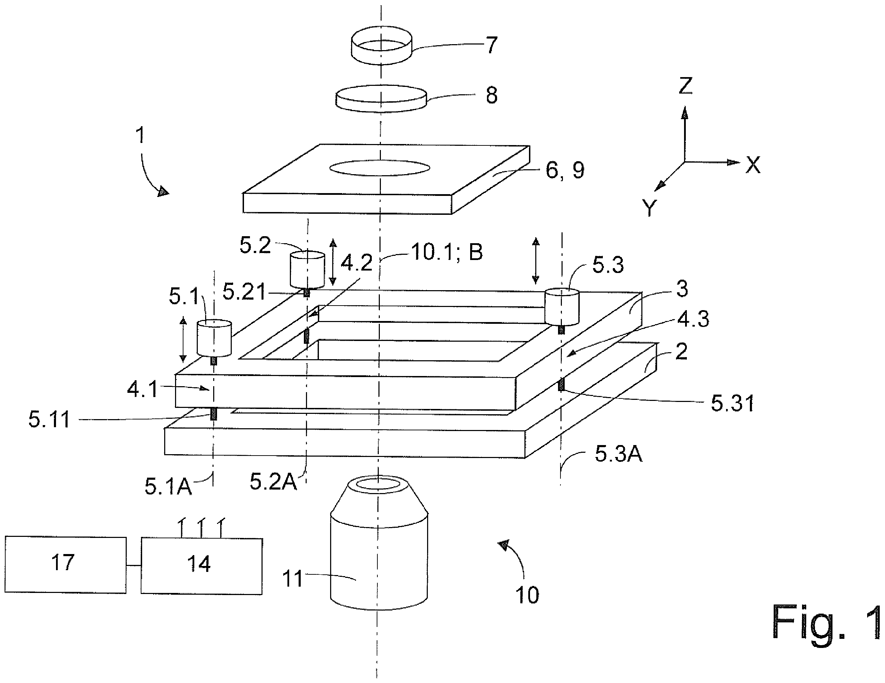

In der Fig. 1 ist schematisch ein erstes Ausführungsbeispiel einer Verstelleinrichtung 1 dargestellt, in dem die Basis 2 und ein Träger 3, jeweils in Form eines Rahmens, übereinander angeordnet und über ein erstes Koppelelement 4.1, ein zweites Koppelelement 4.2 und ein drittes Koppelelement 4.3 miteinander verbunden sind, wobei die drei Koppelelemente 4.1, 4.2 und 4.3 nicht näher dargestellt sind.

Mit der Basis 2 sind ein erster Antrieb 5.1 aufweisend eine sich entlang einer ersten Antriebsachse 5.1A erstreckende erste Antriebsspindel 5.11, ein zweiter Antrieb 5.2 aufweisend eine sich entlang einer zweiten Antriebsachse 5.2A erstreckende zweite Antriebsspindel 5.21 und ein dritter Antrieb 5.3 aufweisend eine sich entlang einer dritten Antriebsachse 5.3A erstreckende dritte Antriebsspindel 5.31 verbunden. Dabei sind die Antriebe 5.1 bis 5.3 über die Antriebsspindeln 5.11 bis 5.31 mit der Basis 2 verbunden, indem die basisseitigen Enden der Antriebsspindeln 5.11 bis 5.31 in X-Richtung X und Y-Richtung Y fest, jedoch um die jeweilige Antriebsachse 5.1A bis 5.3A rotierbar, mit der Basis 2 verbunden, beispielsweise in diese eingesteckt, sind. Die Antriebsachsen 5.1A bis 5.3A sind zueinander parallel und orthogonal zur Basis 2 gerichtet.

In den Träger 3 ist ein Piezoscanner 9 als eine Probenhalterung 6 einsetzbar. In die Probenhalterung 6 ist ein optisch wirksames Element 8 in Form eines Deckglases einsetzbar. Auf dem optisch wirksamen Element 8 ist eine zu beobachtende beziehungsweise zu untersuchende Probe 7 aufbringbar. Die Probe 7 kann beispielsweise auf das optisch wirksame Element 8 aufgelegt, aufgesprüht, aufgetropft (pipettiert) oder aufgeschichtet sein beziehungsweise werden. Im speziellen Fall von Zellen können diese auf dem optisch wirksamen Element platziert und aufgewachsen sein/werden.

In weiteren Ausführungen ist der Piezoscanner 9 dazu ausgebildet, eine separate Probenhalterung 6 aufzunehmen.

Der Piezoscanner 9 kann entlang von bis zu drei Positionierachsen beweglich sein und beispielsweise für eine schnelle z-Fokussierung oder für einen Probenscan verwendet werden. Mittels des Piezoscanners 9 ist eine zusätzliche, autonome Bewegung erzeugbar.

Alternativ ist die Probe 7 mittels einer an dem Träger 3 befestigten und/oder von diesem aufgenommenen Probenhalterung 6 positioniert und gehalten. Die Probenhalterung 6 ist zur Aufnahme des optisch wirksamen Elements 8, beispielsweise die Glasböden eines oder mehrerer Probengefäße in Form einer oder mehrere Petrischale(-n), Multiwell-Kammer(-n), Mikrotiterplatte(-n), eingebettete Probe(-n) auf Objektträgern hinter einem Deckglas ausgebildet.

In der Fig. 1 ist eine inverse Anordnung eines Mikroskops 10 gezeigt, von dem der besseren Übersicht wegen lediglich ein Objektiv 11 dargestellt ist. Eine optische Achse 10.1 des Mikroskops 10 ist durch das optisch wirksame Element 8 auf die Probe 7 gerichtet oder richtbar.

In weiteren Ausführungen kann eine aufrechte Anordnung des Mikroskops 10 verwirklicht sein, bei der die optische Achse 10.1 des Mikroskops 10 von oben durch das optisch wirksame Element 8 auf die Probe 7 gerichtet oder richtbar ist.

Mittels der Antriebe 5.1 bis 5.3 ist eine Neigung des Trägers 3, also dessen Kippbewegung um die X-Achse X und/oder die Y-Achse Y, ermöglicht.

Durch ein synchrones und gleichsinniges Ansteuern der Antriebe 5.1 bis 5.3 ist eine Verstellung des Trägers 3 in Richtung der Z-Achse Z, beispielsweise zum Fokussieren der Probe 7 durch das Mikroskop 10, möglich.

Die Antriebe 5.1 bis 5.3 stehen dazu mit einer Steuerungseinheit 14 in Verbindung, mittels der Steuerbefehle generiert und an die jeweiligen Antriebe 5.1 bis 5.3 übermittelbar sind.

Die Steuerungseinheit 14 ist mit einer Sensoranordnung 17 in einer zur Übertragung von Daten geeigneten Weise verbunden, wobei die Sensoranordnung 17 zur Erfassung einer aktuellen Ausrichtung der Probenhalterung 6 und/oder des optisch wirksamen Elements 8 ausgebildet ist.

Die Basis 2 kann in weiteren Ausführungen ihrerseits lateral, d.h. in Richtung der X-Achse X und/oder der Y-Achse Y positionierbar ausgebildet sein.

Eine solche Verstellbarkeit der Basis 2, und damit der Verstelleinrichtung 1, ermöglicht beispielsweise eine laterale Probenpositionierung oder einen, beispielsweise automatisierten, Probenwechsel.

Weitere Ausführungen der Verstelleinrichtung 1 können alternativ oder zusätzlich eine axiale Positionierung der Basis 2 in Richtung der Z-Achse Z ermöglichen, indem beispielsweise die Basis 2 mittels eines weiteren Antriebs (nicht dargestellt) verstellbar ist.

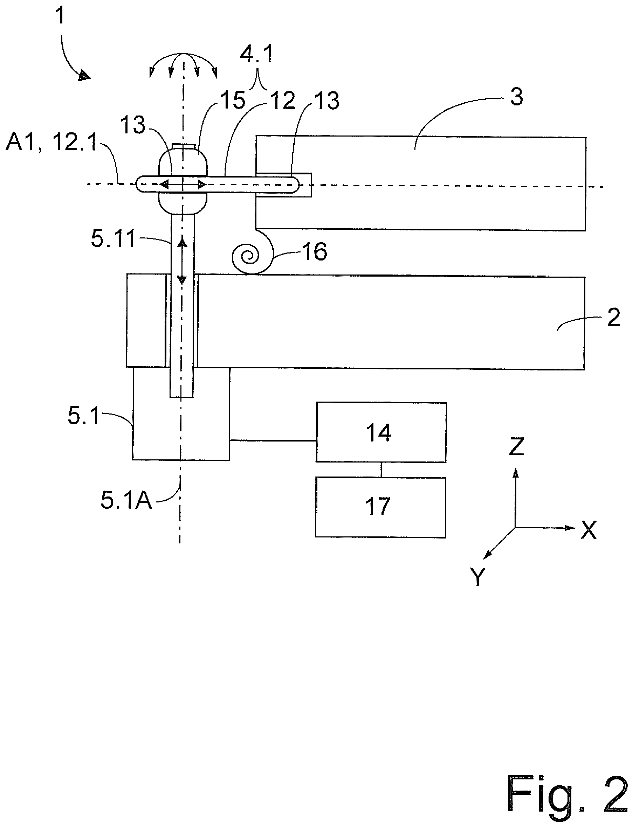

Der in der Fig. 2 in einer Schnittdarstellung gezeigte Ausschnitt eines zweiten Ausführungsbeispiels der Verstelleinrichtung 1 weist einen Antrieb 5.1 auf, der an der Basis 2 befestigt ist und dessen Antriebsspindel 5.11 entlang der ersten Antriebsachse 5.1A in Richtung der Z-Achse Z gerichtet ist.

Die folgende Beschreibung bezieht sich beispielhaft auf den ersten Antrieb 5.1 und die mit diesem in Beziehung stehenden Elemente und gilt entsprechend auch für weitere vorhandene Antriebe 5.1, 5.2, 5.3 bis 5.n.

An dem trägerseitigen Ende der Antriebsspindel 5.11 ist ein Kugelgelenk 15 mit einem Bolzen 12 vorhanden, die zusammen das erste Koppelelement 4.1 bilden. Das Kugelgelenk 15 ist von einer Bohrung 13 durchzogen, in welcher der Bolzen 12 entlang seiner Bolzenlängsachse 12.1 beweglich gelagert ist.

Der Bolzen 12 greift mit einem seiner Enden in eine horizontale Bohrung 13 ein, die in einer Stirnfläche des Trägers 3 vorhanden ist. Die Bohrung 13 weist einen Innendurchmesser auf, der größer als ein Außendurchmesser des Bolzens 12 ist, so dass der Bolzen 12 in der Bohrung 13 des Trägers 3 entlang seiner Bolzenlängsachse 12.1 beweglich ist.

In weiteren Ausführungen ist der Bolzen 12 in der Bohrung des Trägers 3 eingespannt und nur in der Bohrung 13 des Kugelgelenks 15 beweglich gelagert.

In weiteren Ausführungen ist der Bolzen 12 in der Bohrung des Kugelgelenks 15 eingespannt und nur in der Bohrung 13 des Trägers 3 beweglich gelagert.

Die derart ermöglichte lineare Beweglichkeit von Basis 2 und Träger 3 relativ zueinander erfolgt in Richtung einer ersten Bewegungsachse A1 (durch unterbrochene Volllinien eines ersten Typs symbolisiert), die mit der Bolzenlängsachse 12.1 im Wesentlichen zusammenfällt.

Die lineare Beweglichkeit von Basis 2 und Träger 3 entlang der ersten Bewegungsachse A1 ermöglicht einen Ausgleich von Abstandsänderungen zwischen Antriebsspindel 5.11 und Träger 3, wenn der Träger 3 eine Neigung relativ zur Basis 2 erfährt.

Das Kugelgelenk 15 dient als ein Lager unmittelbar für den Bolzen 12 und mittelbar für den Träger 3. Es ermöglicht eine Rotation des Trägers 3 um die erste Antriebsachse 5.1A sowie Schwenkbewegungen um beliebige Achsen in durch die Konstruktion der Verstelleinrichtung 1 bedingten Bewegungsbereichen.

Ist das Kugelgelenk 15 in möglichen Ausführungen mit mindestens einem Kugellager oder Rollenlager ausgestattet, ist dieses vorteilhaft derart angeordnet, dass radial auf das Kugelgelenk 15 wirkende Kräfte vorteilhaft in Richtung der ersten Antriebsachse 5.1A abgeleitet werden können. Biegebeanspruchungen der Antriebspindel 5.11 um die Y-Achse Y werden durch eine solche Ausführung vorteilhaft reduziert.

Um einen für eine präzise Zustellung vorteilhaften Kontakt von erstem Koppelelement 4.1, Basis 2 und Träger 3 ständig sicherzustellen, sind Basis 2 und Träger 3 durch ein zwischen diesen angeordnetem Federelement 16 belastet, das im Ausführungsbeispiel lediglich beispielhaft als eine Spiralfeder ausgebildet ist und als Druckfeder wirkt. Es können weitere Federelemente 16 vorhanden sein.

In alternativen Ausführungen kann eines oder alle der Federelemente 16 beispielsweise eine Schraubenfeder, eine Blattfeder oder ein elastisch verformbares Element aus Gummi, einer Gummimischung, einem Kunststoff oder einem Verbundwerkstoff beispielsweise umfassend eine Kombination wenigstens zweier der Werkstoffe Gummi, Kunststoff und Metall sein. Jedes Federelement 16 kann in weiteren Ausführungen als eine Zugfeder ausgebildet sein.

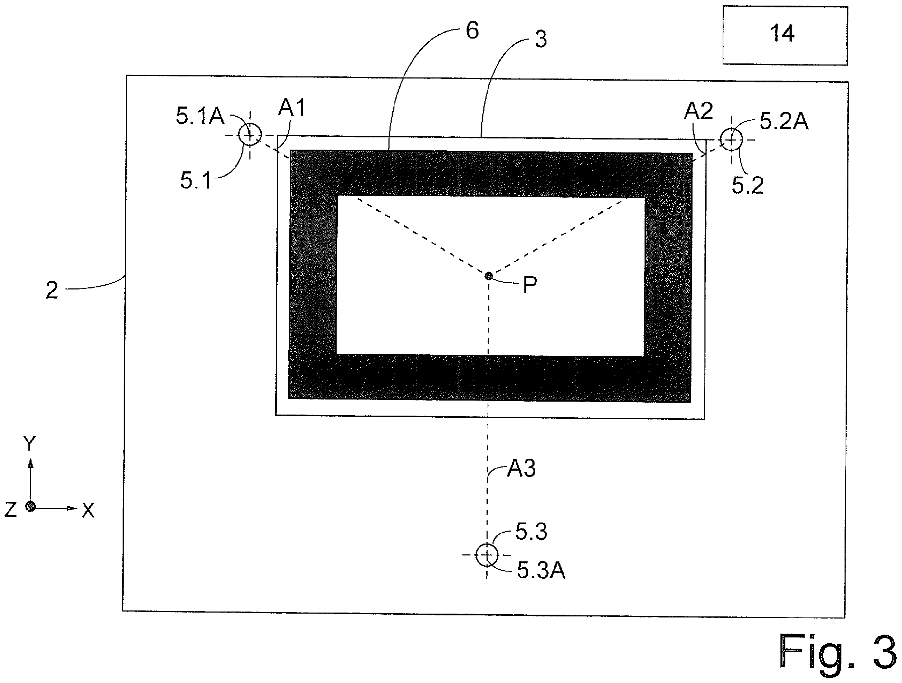

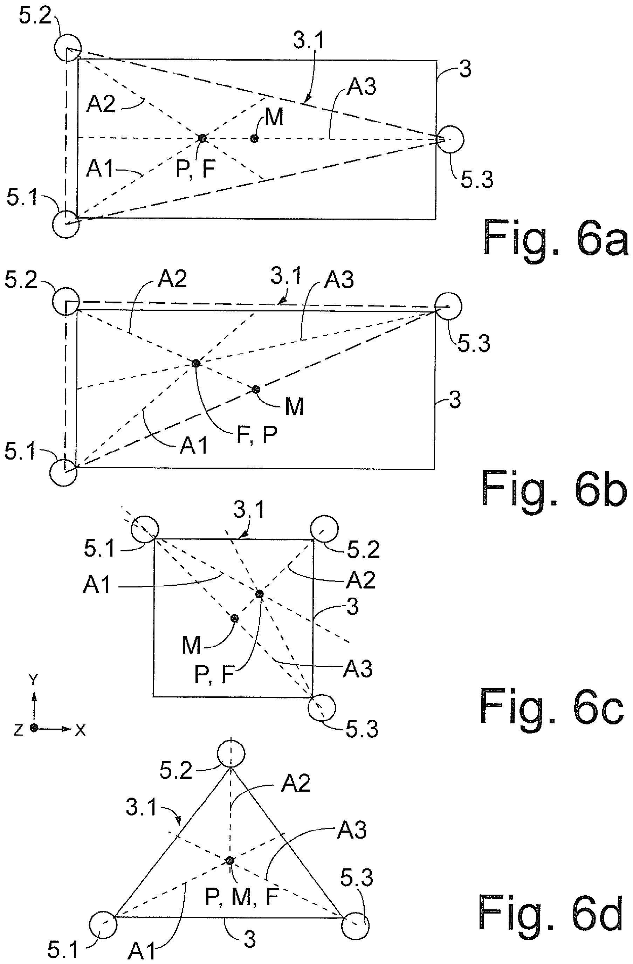

Eine Anordnung der Antriebe 5.1 bis 5.3 auf einer gemeinsamen Kreisbahn und unter einem Winkel von jeweils 120° zueinander ist in der Fig. 3 als drittes Ausführungsbeispiel dargestellt. Die Antriebe 5.1 bis 5.3 bilden die Eckpunkte einer Trägerfläche 3.1 (siehe Fig. 6a bis 6d).

Die erste bis dritte Bewegungssachse A1 bis A3 schneiden sich in einem virtuellen Pivotpunkt P in der Trägerfläche 3.1, wobei der Pivotpunkt P zugleich den Flächenschwerpunkt der Trägerfläche 3.1 darstellt. Der Träger 3 ist infolge einer Ansteuerung der Antriebe 5.1 bis 5.3 mittels der Steuereinheit 14 um die X-Achse X und/oder um die Y-Achse Y, beziehungsweise um zu der X-Achse X und/oder der Y-Achse Y parallele Achsen, verkippbar, so dass die Ausrichtung einer vorhandenen Probenhalterung 6 und eines optisch wirksamen Elements 8 (siehe Fig. 1), insbesondere eines vorhandenen Deckglases, gesteuert beeinflussbar ist. Zugleich bleibt der Pivotpunkt P, um den eine Kippbewegung erfolgt, bezüglich seiner Position in Richtung der Z-Achse Z unverändert.

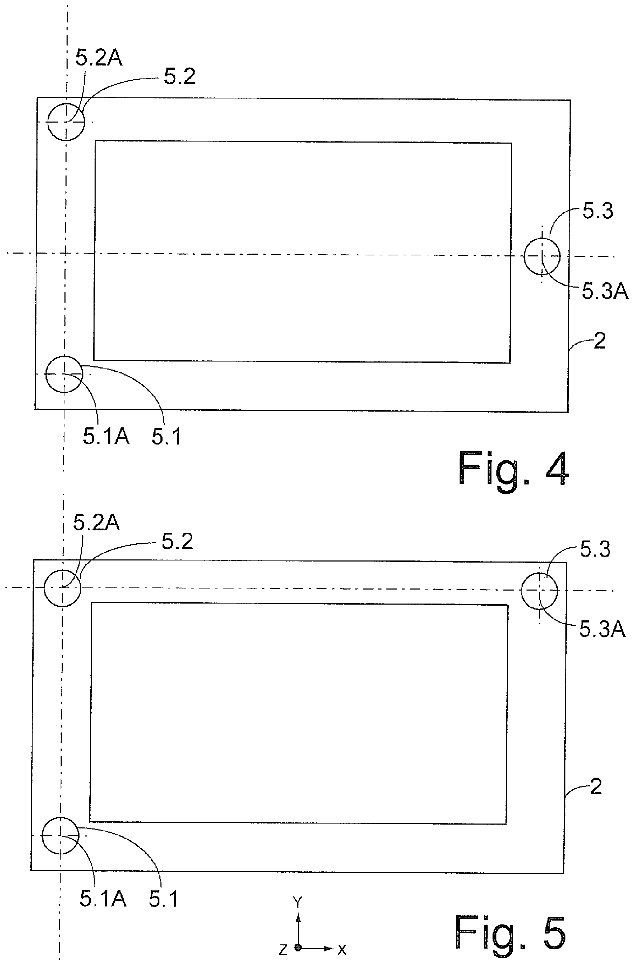

Eine platzsparende mögliche Anordnung der Antriebe 5.1 bis 5.3 ist in der Fig. 4 in der Draufsicht auf die Basis 2 dargestellt. Bei einer gezielten Ansteuerung der Antriebe 5.1 bis 5.3 ist der nicht dargestellte Träger 3 um die mittels je einer Punkt-Strich-Linie symbolisierten Achsen kippbar. Werden alle drei Antriebe 5.1 bis 5.3 synchron und gleichsinnig angesteuert, erfolgt die Relativbewegung zwischen Basis 2 und Träger 3 nur in Richtung der Z-Achse Z. Wird nur der Antrieb 5.3 angesteuert, erfolgt eine Kippung des Trägers 3 um die Punkt-Strich-Linie zwischen den Antrieben 5.1 und 5.2. Durch eine gleichzeitige gegenläufige Ansteuerung der Antriebe 5.1 und 5.2 ist die durch den dritten Antrieb 5.3 verlaufen dargestellte Achse parallel verschiebbar.

Eine weitere mögliche Ausführung der Verstelleinrichtung 1 ist in der Fig. 5 dargestellt, bei der die Antriebe 5.1 bis 5.3 als Eckpunkte eines rechtwinkligen Dreiecks angeordnet sind.

In den Figuren 6a bis 6d sind verschiedene Anordnungen der Antriebe 5.1 bis 5.3 dargestellt. Außerdem sind jeweils die Trägerflächen 3.1 gezeigt, deren Eckpunkte die Antriebe 5.1 bis 5.3 bilden. Die Trägerflächen 3.1 sind durch unterbrochene Volllinien eines zweiten Typs begrenzt dargestellt.

Die Bewegungsachsen A1 bis A3, entlang derer der Träger 3 mittels der Koppelelemente 4.1 bis 4.3 linear bewegbar ist, sind durch die unterbrochenen Volllinien des ersten Typs dargestellt.

Die virtuellen Schnittpunkte der Bewegungsachsen A1 bis A3 in der Trägerfläche 3.1 sind jeweils als Pivotpunkt P bezeichnet und befinden sich innerhalb eines Bildfelds eines Mikroskops 10 (siehe Fig. 1).

In einer Anordnung gemäß der Fig. 6a bilden die Antriebe 5.1 bis 5.3 Eckpunkte einer Trägerfläche 3.1 in Form eines gleichschenkligen Dreiecks. Die Basis 2 (nicht dargestellt) und/oder der Träger 3 weisen eine rechteckige Form auf.

Die Basis 2 (nicht dargestellt) und/oder der Träger 3 der in der Fig. 6b dargestellten Anordnungsmöglichkeit weisen ebenfalls eine rechteckige Form auf. Die Antriebe 5.1 bis 5.3 bilden die Eckpunkte eines rechtwinkligen Dreiecks.

Der Pivotpunkt P fällt in den Ausführungen gemäß der Fig. 6a bis 6d mit dem Flächenschwerpunkt F der Trägerfläche 3.1 zusammen.

Ist beziehungsweise sind die Basis 2 (nicht dargestellt) und/oder der Träger 3 dreieckig ausgebildet und bilden die Antriebe 5.1 bis 5.3 Eckpunkte eines Dreiecks, beispielsweise eines gleichseitigen Dreiecks, wie dies in der Fig. 6d schematisch gezeigt ist, fallen Pivotpunkt P, der Masseschwerpunkt M des Trägers 3 und der Flächenschwerpunkt F der Trägerfläche 3.1 zusammen. Es wird angenommen, dass der Träger 3 eine homogene Dicke aufweist und aus einem homogenen Material oder Materialverbund besteht.

Die Merkmale der Ausführungsbeispiele sind im Rahmen fachmännischen Handelns miteinander kombinierbar.

Die Ausführung eines nicht zur Erfindung gehörenden Verfahrens zur Einstellung der Ausrichtung der Probenhalterung 6 wird beispielhaft anhand der Fig. 1 und 2 beschrieben.

Die Probenhalterung 6 wird dabei relativ zu der als Bezugsachse B dienenden optischen Achse 10.1 des Mikroskops 10 ausgerichtet.

In alternativen Ausgestaltungen des Verfahrens erfolgt die Ausrichtung relativ zu einer Bezugsebene, die beispielsweise durch eine X-Y-Ebene XY gegeben ist, in der sich die Basis 2 erstreckt.

Zur Ausführung des Verfahrens wird ein Mikroskop 10 verwendet, das eine Verstelleinrichtung 1 in einer der möglichen Ausführungsformen umfasst.

Es wird eine aktuelle Ausrichtung der Probenhalterung 6 erfasst, wobei die optische Achse 10.1 des Mikroskops 10 durch die Probenhalterung 6 gerichtet ist. Die Position und Richtung der optischen Achse 10.1 sind bekannt oder werden mittels geeigneter Mittel, beispielsweise mittels Lagesensoren, ermittelt.

Mittels der Sensoranordnung 17 wird eine aktuelle Ausrichtung des optisch wirksamen Elements 8 der Probenhalterung 6 erfasst. Die optische Achse 10.1 ist durch das optisch wirksame Element 8 gerichtet.

Anschließend wird die erfasste aktuelle Ausrichtung des optisch wirksamen Elements 8 mit der Ausrichtung und Position der Bezugsachse beziehungsweise der Bezugsebene verglichen.

Im Falle einer Abweichung der aktuellen Ausrichtung des optisch wirksamen Elements 8 von der Bezugsachse beziehungsweise von der Bezugsebene wird die Ausrichtung der Probenhalterung 6 derart verändert, dass die Abweichung der aktuellen Ausrichtung des optisch wirksamen Elements 8 von der Bezugsachse oder der Bezugsebene aufgehoben ist.

Um den mit der Ausrichtung verbundenen Aufwand bei der Datenverarbeitung praxisgerecht zu begrenzen ist es vorteilhaft, wenn eine zulässige Abweichungstoleranz festgelegt wird und die Ausrichtung der Probehalterung (gesteuert) derart verändert wird, dass die Abweichung der aktuellen Ausrichtung des optisch wirksamen Elements von der Bezugsachse beziehungsweise von der Bezugsebene kleiner als die zulässige Abweichungstoleranz ist.

### Bezugszeichen

- 1: Verstelleinrichtung
- 2: Basis
- 3: Träger
- 3.1: Trägerfläche
- 4.1: erstes Koppelelement
- 4.2: zweites Koppelelement
- 4.3: drittes Koppelelement
- 5.1: erster Antrieb
- 5.2: zweiter Antrieb
- 5.3: dritter Antrieb
- 5.11: erste Antriebsspindel
- 5.21: zweite Antriebsspindel
- 5.31: dritte Antriebsspindel
- 5.1A: erste Antriebsachse
- 5.2A: zweite Antriebsachse
- 5.3A: dritte Antriebsachse
- 6: Probenhalterung
- 7: Probe
- 8: optisch wirksames Element (Deckglas)
- 9: Piezoscanner
- 10: Mikroskop
- 10.1: optische Achse (des Mikroskops 10)
- 11: Objektiv
- 12: Bolzen
- 12.1: Bolzenlängsachse
- 13: Bohrung
- 14: Steuerungseinheit
- 15: Kugelgelenk
- 16: Federelement
- 17: Sensoranordnung
- A1: erste Bewegungsachse
- A2: zweite Bewegungsachse
- A3: dritte Bewegungsachse
- B: Bezugsachse
- P: Pivotpunkt
- F: Flächenschwerpunkt(Trägerfläche 3.1)
- M: Masseschwerpunkt (des Trägers 3)
- X: X-Richtung
- Y: Y-Richtung
- Z: Z-Richtung
- XY: X-Y-Ebene

## Patentansprüche

1. Verstelleinrichtung (1) einer Probenhalterung (6) umfassend:
- eine Basis (2) mit darauf angeordneten Antrieben (5.1 bis 5.3), wobei ein erster Antrieb (5.1) eine sich entlang einer ersten Antriebsachse 5.1A erstreckende erste Antriebsspindel 5.11, ein zweiter Antrieb 5.2 eine sich entlang einer zweiten Antriebsachse 5.2A erstreckende zweite Antriebsspindel 5.21 und ein dritter Antrieb 5.3 eine sich entlang einer dritten Antriebsachse 5.3A erstreckende dritte Antriebsspindel 5.31 aufweisen,
- einen Träger (3), der mittels der Antriebe (5.1 bis 5.3), verstellbar ist und der zur Aufnahme der Probenhalterung (6) ausgebildet ist,
- je Antrieb (5.1 bis 5.3) ein Koppelelement (4.1 bis 4.3), das zur Verbindung von Basis (2) und Träger (3) ausgebildet ist, wobei jedes Koppelelement (4.1 bis 4.3) sowohl mindestens einen linearen Freiheitsgrad als auch mindestens einen rotatorischen Freiheitsgrad aufweist,
- der Träger (3) entlang jeweils einer von dem Koppelelement (4.1, 4.2, 4.3) auf den Träger (3) gerichteten Bewegungsachse (A1, A2, A3) linear bewegbar ist,
**dadurch gekennzeichnet, dass**
- der Träger (3) mittels der angetriebenen Koppelelemente (4.1 bis 4.3) in Richtung jeder der Achsen eines kartesischen Koordinatensystems verstellbar ist und
- sich die Bewegungsachsen (A1, A2, A3) virtuell in einem Pivotpunkt (P) des Trägers (3) schneiden, und
- die Verbindung des Koppelelements (4.1, 4.2, 4.3) mit dem Träger (3) mittels eines entlang der Bewegungsachse (A1, A2, A3) beweglichen Bolzens (12) gebildet ist, wobei der Bolzen (12) in einem am trägerseitigen Ende der Antriebsspindel (5.11) vorhandenen Kugelgelenk (15) und dort in einer das Kugelgelenk (15) durchziehenden Bohrung (13) gelagert ist und der Bolzen (12) mit einem seiner Enden in einer Bohrung (13) in einer Stirnseite des Trägers (3) eingreift und der Bolzen (12) entlang seiner Bolzenlängsachse (12.1) in der Bohrung (13) des Kugelgelenks (15) und/oder in der Bohrung (13) des Trägers (3) beweglich gelagert ist.

2. Verstelleinrichtung (1) nach Anspruch 1, **dadurch gekennzeichnet, dass** durch die Antriebe (5.1 bis 5.3) Eckpunkte einer Trägerfläche (3.1) gebildet sind und ein Pivotpunkt (P) auf der Trägerfläche (3.1) liegt.

3. Verstelleinrichtung (1) nach Anspruch 2, **dadurch gekennzeichnet, dass** der Pivotpunkt (P) der Flächenschwerpunkt der Trägerfläche (3.1) ist.

4. Verstelleinrichtung (1) nach einem der Ansprüche 1 bis 3, **dadurch gekennzeichnet, dass** drei Antriebe (5.1, 5.2, 5.3) vorhanden sind.

5. Verstelleinrichtung (1) nach einem der vorhergehenden Ansprüche, **dadurch gekennzeichnet, dass** die Antriebe (5.1 bis 5.3) jeweils eine Antriebsachse (5.1A, 5.2A, 5.3A) aufweisen, entlang der eine auf das Koppelelement (4.1, 4.2, 4.3) übertragene oder übertragbare Zustellbewegung des Antriebs (5.1 bis 5.3) bewirkt beziehungsweise bewirkbar ist, wobei die Antriebsachsen (5.1A, 5.2A, 5.3A) zueinander parallel und senkrecht zur Basis (2) gerichtet sind.

6. Mikroskop (10) umfassend eine Verstelleinrichtung (1) nach einem der Ansprüche 1 bis 5, **dadurch gekennzeichnet, dass** der Pivotpunkt (P) auf der optischen Achse (10.1) des Mikroskops (10) liegt.

## Claims

1. Adjusting mechanism (1) of a sample holder (6) comprising:
- a base (2) with drives (5.1 to 5.3) arranged thereon, wherein a first drive (5.1) has a first drive spindle (5.11) extending along a first drive axis (5.1A), a second drive (5.2) has a second drive spindle (5.21) extending along a second drive axis (5.2A) and a third drive (5.3) has a third drive spindle (5.31) extending along a third drive axis (5.3A),
- a carrier (3), which is adjustable by means of the drives (5.1 to 5.3) and is designed to receive the sample holder (6),
- for each drive (5.1 to 5.3) a coupling element (4.1 to 4.3), which is designed to connect base (2) and carrier (3), wherein each coupling element (4.1 to 4.3) has both at least one linear degree of freedom and also at least one rotary degree of freedom,
- the carrier (3) is linearly movable along a respective movement axis (A1, A2, A3) directed from the coupling element (4.1, 4.2, 4.3) to the carrier (3),
**characterized in that**
- the carrier (3) is adjustable, by means of the driven coupling elements (4.1 to 4.3), in the direction of each of the axes of a Cartesian system of coordinates and
- the movement axes (A1, A2, A3) intersect virtually at a pivot point (P) of the carrier (3), and
- the connection of the coupling element (4.1, 4.2, 4.3) to the carrier (3) is formed by means of a bolt (12) movable along the movement axis (A1, A2, A3), wherein the bolt (12) is mounted in a ball joint (15) which is present at the carrier-side end of the drive spinde (5.11) and is mounted there in a bore (13) which extends through the ball joint (15) and the bolt (12) engages with one of its ends in a bore (13) in an end face of the carrier (3) and the bolt (12) is mounted so as to be movable along its longitudinal axis (12.1) in the bore (13) of the ball joint (15) and/or in the bore (13) of the carrier (3).

2. Adjusting mechanism (1) according to Claim 1, **characterized in that** corner points of a carrier surface (3.1) are formed by the drives (5.1 to 5.3), and a pivot point (P) lies on the carrier surface (3.1) .

3. Adjusting mechanism (1) according to Claim 2, **characterized in that** the pivot point (P) is the area centroid of the carrier surface (3.1).

4. Adjusting mechanism (1) according to one of Claims 1 to 3, **characterized in that** three drives (5.1, 5.2, 5.3) are present.

5. Adjusting mechanism (1) according to one of the preceding claims, **characterized in that** the drives (5.1 to 5.3) each have a drive axis (5.1A, 5.2A, 5.3A) along which an advancing movement of the drive (5.1 to 5.3) transmitted or transmittable to the coupling element (4.1, 4.2, 4.3) is effected or can be effected, wherein the drive axes (5.1A., 5.2A, 5.3A) are directed parallel to each other and perpendicular to the base (2).

6. Microscope (10) comprising an adjusting mechanism (1) according to one of Claims 1 to 5, **characterized in that** the pivot point (P) lies on the optical axis (10.1) of the microscope (10).

## Revendications

1. Dispositif de réglage (1) d'un porte-échantillon (6) comprenant :
- une base (2) munie d'entraînements (5.1 à 5.3) disposés sur celle-ci, dans lequel un premier entraînement (5.1) comporte une première broche d'entraînement 5.11 s'étendant le long d'un premier axe d'entraînement 5.1A, un deuxième entraînement 5.2 comporte une deuxième broche d'entraînement 5.21 s'étendant le long d'un deuxième axe d'entraînement 5.2A et un troisième entraînement 5.3 comporte une troisième broche d'entraînement 5.31 s'étendant le long d'un troisième axe d'entraînement 5.3A,
- un support (3) qui est réglable au moyen des entraînements (5.1 à 5.3) et qui est destiné à recevoir le porte-échantillon (6),
- pour chaque entraînement (5.1 à 5.3), un élément de couplage (4.1 à 4.3) destiné à relier la base (2) et le support (3), dans lequel chaque élément de couplage (4.1 à 4.3) présente à la fois au moins un degré de liberté linéaire et au moins un degré de liberté en rotation,
- le support (3) est respectivement mobile linéairement le long d'un axe de déplacement (A1, A2, A3) dirigé de l'élément de couplage (4.1, 4.2, 4.3) vers le support (3),
**caractérisé en ce que**
- le support (3) est réglable au moyen des éléments de couplage entraînés (4.1 à 4.3) dans la direction de chacun des axes d'un système de coordonnées cartésiennes, et
- les axes de déplacement (A1, A2, A3) se coupent pratiquement en un point de pivotement (P) du support (3), et
- la liaison de l'élément de couplage (4.1, 4.2, 4.3) au support (3) est réalisée au moyen d'un boulon (12) mobile le long de l'axe de déplacement (A1, A2, A3), dans lequel le boulon (12) est monté dans un joint à rotule (15) présent à l'extrémité côté support de la broche d'entraînement (5.11) et à cet endroit, dans un alésage (13) traversant le joint à rotule (15) et le boulon (12) s'engage par l'une de ses extrémités dans un alésage (13) ménagé dans une face frontale du support (3) et le boulon (12) est monté mobile le long de son axe longitudinal de boulon (12.1) dans l'alésage (13) du joint à rotule (15) et/ou dans l'alésage (13) du support (3).

2. Dispositif de réglage (1) selon la revendication 1, **caractérisé en ce que** des points d'angle d'une surface de support (3.1) sont formés par les entraînements (5.1 à 5.3) et **en ce qu'**un point de pivotement (P) repose sur la surface de support(3.1).

3. Dispositif de réglage (1) selon la revendication 2, **caractérisé en ce que** le point de pivotement (P) est le centre de gravité de la surface porteuse (3.1).

4. Dispositif de réglage (1) selon l'une des revendications 1 à 3, **caractérisé en ce que** trois entraînements (5.1, 5.2, 5.3) sont présents.

5. Dispositif de réglage (1) selon l'une des revendications précédentes, **caractérisé en ce que** les entraînements (5.1 à 5.3) présentent chacun un axe d'entraînement (5.1A, 5.2A, 5.3A) le long duquel un mouvement d'avance de l'entraînement (5.1 à 5.3) transmis ou pouvant être transmis à l'élément de couplage (4.1, 4.2, 4.3) est produit ou peut être produit, dans lequel les axes d'entraînement (5.1A, 5.2A, 5.3A) sont dirigés parallèlement les uns aux autres et perpendiculairement à la base (2).

6. Microscope (10) comprenant un dispositif de réglage (1) selon l'une des revendications 1 à 5, **caractérisé en ce que** le point de pivotement (P) repose sur l'axe optique (10.1) du microscope (10).
